(19) Europäisches Patentamt
European Patent Office
Office européen des brevets

(11) Publication number: 0 034 228
B1

(12) **EUROPEAN PATENT SPECIFICATION**

(45) Date of publication of patent specification: **10.10.84**

(51) Int. Cl.$^3$: **C 10 G 35/09**, B 01 J 23/64, B 01 J 37/04

(21) Application number: **80300442.3**

(22) Date of filing: **15.02.80**

# (54) Reforming process.

(43) Date of publication of application:
**26.08.81 Bulletin 81/34**

(45) Publication of the grant of the patent:
**10.10.84 Bulletin 84/41**

(84) Designated Contracting States:
**DE NL SE**

(56) References cited:
**EP-A-0 009 309**
**EP-A-0 026 058**
**DE-A-2 627 822**
**FR-A-2 282 937**

(73) Proprietor: **MOBIL OIL CORPORATION**
**150 East 42nd Street**
**New York New York 10017 (US)**

(72) Inventor: **Schoennagel, Hans Juergen**
**42 Pine Knoll Drive**
**Lawrenceville, New Jersey 08648 Mercer (US)**

(74) Representative: **West, Alan Harry**
**Mobil Court 3 Clements Inn**
**London WC2A 2EB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a reforming process using a catalyst composition containing platinum, rhenium and iridium.

The present invention relies upon a catalyst composition which is a mixture of two components, one component containing a minor proportion of platinum and rhenium on a support and the second component containing a minor proportion of iridium on a separate support.

The present invention provides a reforming process which comprises contacting a reforming charge stock under reforming conditions, without addition of sulphur, with a catalyst which is a mixture of two components, one component containing a minor proportion of platinum and rhenium on a support and the second component containing a minor proportion of iridium on a separate support.

Preparing a catalyst composition for use in the invention may comprise impregnating particles of a support with a platinum compound and a rhenium compound, drying and calcining the platinum- and rhenium-containing particles in air, impregnating separate particles of a support with an iridium compound, drying and calcining the iridium-containing particles in an inert gas that does not contain oxygen and mixing the platinum- and rhenium-containing particles with the iridium-containing particles.

Catalysts intended for use in reforming operations wherein hydrocarbon fractions such as naphthas gasolines or mixtures thereof are treated to improve the anti-knock characteristics thereof are well known in the petroleum industry.

It has heretofore been proposed to employ metal-containing catalysts for promoting reforming. Such catalysts are necessarily characterized by a certain amount of acidity. One type of reforming catalyst which has been used commercially consists of an alumina base material having platinum metal impregnated thereon, with the acidity characteristic being contributed by a small amount of halogen incorporated in the catalyst.

In more recent years, multimetallic reforming catalysts, for example bimetallic catalysts, have come into use. These catalysts generally contain platinum, together with one or more additional metals such as rhenium, germanium, iridium palladium, osmium, ruthenium, rhodium, copper, silver, tin or gold deposited on a refractory support which also contains a specified amount of halogen. Representative of multimetallic reforming catalysts are those containing platinum and iridium, such as described in U.S. Patent No. 2,848,377 and more recently in U.S. Patent No. 3,953,368. The latter patent reports certain advantages when platinum and iridium are present on a refractory support as highly dispersed polymetallic clusters in which metallic atoms are separated by distances of 0.25 to 0.4 nm.

It has also heretofore been known to conduct catalytic reforming utilizing a catalyst consisting essentially of a particularly defined mixture of particles of a porous carrier impregnated with a small amout of platinum and particles of an acidic cracking component. Representative disclosures of such prior art are to be found in U.S. Patent Nos. 2,854,400; 2,854,403 and 3,854,404. Also, it has been suggested, for example, in DE—A—2,627,822 to conduct reforming in the presence of a catalyst constituting a mixture of platinum on one solid carrier and rhenium on a second solid carrier.

All of the above catalysts, while possessing certain advantages, suffer from inherent deficiencies in either activity, stability or sensitivity to poisons, e.g., sulfur, under severe reforming conditions. Recent environmental regulations prohibiting the use in gasoline of previously used octane number improvers such as tetraethyl lead have brought about a demand for reformate of increased octane number. Such products of high octane number can only be obtained under severe reforming conditions. However, these severe conditions, greatly accelerate the aging of the reforming catalyst. The ability of a reforming catalyst to provide a high yield of gasoline of high octane number over an extended period of time is, as will be realized, a highly desirable attribute which has long been sought.

With a view to providing such an improved reforming catalyst there has been proposed in EP—A1—9309 a catalyst composition comprising a refractory support, from 0.1 to 2 weight percent platinum, from 0.1 to 2 weight percent iridium and from 0.1 to 5 weight percent halogen, the platinum and iridium being contained on separate particles of the support and the weight ratio of particles containing platinum to particles containing iridium being 10:1 to 1:10. That catalyst may contain also one or more additional catalyst components such as silver, osmium, copper gold, palladium, rhodium, gallium, rhenium, germanium or tin or compounds thereof on one support and one or more such additional catalyst components on the second support containing the iridium.

Furthermore, EP—A1—26058 describes reforming over a catalyst comprising a minor proportion of platinum on a support and a minor proportion of iridium on a separate support optionally with an additional metal component such as rhenium being included in the platinum-containing component, but in which added sulfur is introduced into the reforming zone to counteract excessive hydrocracking of the charge.

According to the present invention, there is provided a reforming process employing a catalyst composition under reforming conditions which is a mixture of a first component containing a minor proportion of platinum on a refractory support and a second component containing a minor proportion of iridium on a refractory support, the first component also containing on its support a minor proportion of rhenium, the catalyst comprising overall from 0.1 to 5 weight percent of platinum, from 0.1 to 5 weight percent of rhenium, from 0.1 to 5 weight percent of iridium and from 0.1 to 5 weight percent of halogen, with the relative weight ratio of the particles containing platinum-rhenium and those containing iridium being from 10:1 to 1:10, preferably between 5:1 to 1:5. The process is characterized by the fact that the reforming conditions aforesaid comprise maintaining the reaction zone free of added sulphur. The dimensions of the separate particles may range from powder size, e.g. 0.01 micrometer up to particles of substantial size, e.g., 10,000 micrometers. Preferably, the particle size is between 1 and 3000 micrometers, with the size of the platinum-rhenium-containing and iridium-containing particles either being of differing size within the above range or of substantially the same size.

The refractory support of the present catalyst is a porous adsorptive material having a surface area exceeding 20 square meters per gram and preferably greater than about 100 square meters per gram. Refractory inorganic oxides are preferred supports, particularly alumina or mixtures thereof with silica. Alumina is particularly preferred and may be used in a large variety of forms including alumina, precipitate or gel, alumina monohydrate and sintered alumina. Various forms of alumina either singly or in combinations, such as eta, chi, gamma, theta, delta or alpha alumina may be suitably employed as the alumina support. Preferably, the alumin is gamma alumina and/or eta alumina. The above nomenclature used in the present specification and claims with reference to alumina phase designation is that generally employed in the United States and described in "The Aluminum Industry: Aluminum and its Production" by Edwards, Frary and Jeffries, published by McGraw-Hill (1930).

The refractory support, desirably alumina, having a particle size of at least about 0.01 micrometer and generally not exceeding about 10,000 micrometers is contacted with a source of halogen. Both the particles of platinum/rhenium-containing refractory support and the separate particles of iridium-containing refractory support will contain halogen.

Halogen may be added to the support, preferably alumina, in a form which will readily react therewith in order to obtain the desired results. One feasible method of adding the halogen is in the form of an acid, such as hydrogen fluoride, hydrogen bromide, hydrogen chloride and/or hydrogen iodide. Other suitable sources of halogen include salts such as ammonium fluoride and ammonium chloride. When such salts are used, the ammonium ions will be removed during subsequent heating of the catalyst. Halogen may also be added as fluorine, chlorine, bromine or iodine or by treatment in gaseous hydrogen halide. The halogen, preferably a chlorine or fluorine moiety, may be incorporated into the catalyst at any suitable stage in the catalyst manufacture. Thus, halogen may be added before, after or during incorporation of the platinum-rhenium and iridium on the separate particles of refractory support. Halogen is conveniently incorporated into the catalyst when impregnating the support with halogen-containing metal compounds, such as chloroplatinic acid or chloroiridic acid. Additional amounts of halogen may be incorporated in the catalyst by contacting it with materials such as hydrogen fluoride and hydrogen chloride, either prior to or subsequent to the metal impregnation step. Halogen may also be incorporated by contacting the catalyst with a gaseous stream containing the halogen, such as chlorine or hydrogen chloride. One feasible way to halogenate the alumina is by the addition of an alkyl halide such as tertiary butyl chloride during the reforming operation. The amount of halogen introduced into the support is such that the halogen content of the overall catalyst is between 0.1 and 5 weight percent. Such halogen content may be deposited on either the platinum-rhenium-containing or iridium-containing particles, and desirably is present on both particles in an approximate weight rate range which may extend from 1:10 to 10:1 of the total halogen content. Generally, as a preferred and practical matter, the halogen content of each of the particles making up the catalyst will be approximately the same.

The platinum and rhenium may be deposited on the support, desirably alumina, in any suitable manner. Generally, it is feasible to mix particles of support with a mixture of a platinum compound and a rhenium compound. Suitable platinum compounds include chloroplatinic acid, platinum tetrachloride, bromoplatinic acid, the ammonium salt of chloroplatinic or bromoplatinic acid. Suitable rhenium compounds include perrhenic acid ($HReO_4$) and ammonium perrhenate ($NH_4ReO_4$).

The iridium metal may be deposited on the support, desirably alumina, by contacting with an appropriate iridium compound such as the ammonium chloride double salt, tribromide, trichloride, tetrachloride or chloroiridic acid. Iridium amine complexes may also suitably be employed.

The impregnated platinum-rhenium particles may then be calcined in air at an elevated temperature generally in the range of 427 to 538°C (800 to 1000°F) and the impregnated iridium particles calcined in an inert gas that does not contain oxygen, preferably nitrogen at a temperature between 260 and 399°C (500 and 750°F) prior to the introduction of the catalyst into the reforming unit. In addition, the

catalyst may be exposed to a hydrogen atmosphere to reduce a substantial portion of the metal components to the elemental state.

In a preferred technique, the support particles are presaturated with gaseous carbon dioxide prior to impregnation with an aqueous solution or solutions of a compound or complex containing the desired metal or metals. It has been found that the carbon dioxide pre-saturation treatment provides good metal distribution throughout the support even at the high metal concentrations that the separate particle catalysts require, resulting in better catalytic properties. A carbon dioxide treatment may also be used following impregnation.

Reforming of a hydrocarbon charge, such as a naphtha, can be effectively carried out over an extended period of time under conditions of high severity to produce a high yield of gasoline of high octane number, e.g., 100 R+O (Research octane number with no lead added), when the reforming is carried out in the presence of the catalysts.

Reforming utilizing the present catalysts is conducted in the presence of hydrogen under reforming conditions. The latter include a temperature between 371 and 593°C (700 and 1100°F) and more usually between 427 and 538 (800 and 1000°F); a pressure within the range of 447 to 6997 kPa (50 to 1000 psig) and preferably between 791 and 4928 kPa (100 and 700 psig) and a weight hourly space velocity of between 0.1 and 10 and preferably between 0.5 and 4. The molar ratio of hydrogen to hydrocarbon charge is generally between 0.5 and 20 and preferably between 2 and 12. Since the reforming process produces large quantities of hydrogen, at least a portion thereof may be conveniently employed for the introduction of hydrogen with the feed.

Charge stocks undergoing reforming, using the catalyst described herein, are those conventionally employed. These include virgin naphtha, cracked naphtha, gasoline including Fluid Catalytic Cracked (FCC) gasoline or mixtures thereof boiling within the approximate range of 21 to 260°C (70 to 500°F) and, preferably within the range of 49 to 232°C (120 to 450°F).

Using the catalysts, it has been found that it is possible to operate under more severe reforming conditions, for example, those which will produce a gasoline having an octane number of 100 R+O, than is capable of achievement with other platinum-iridium, platinum-rhenium or platinum-rhenium-iridium catalysts in which all of the metals are deposited on the same support particle. Such severe reforming conditions include, for example, a pressure of 1825 kPa (250 psig), a weight hourly space velocity of 2, a total recycle ratio of 7 and a product of 100 R+O octane number. It is possible with the present process to achieve such high octane gasoline even with difficult charge stocks such as an Arab light $C_6$—183°C (—360°F) naphtha.

A very distinct advantage of the trimetallic reforming catalyst described herein containing separate platinum-rhenium alumina and iridium alumina particles is its ability to maintain its catalytic activity under conditions of high severity over an extended period of time. In a typical commercial reforming process, reaction temperature is increased during the course of the run to maintain a constant product octane level. Increasing the reaction temperature becomes necessary since the catalyst is continuously deactivated. Generally, the reaction temperature cannot exceed about 538°C (1000°F) before rapid deactivation of the catalyst is encountered. Accordingly, as the reaction temperature approaches about 538°C (1000°F), it is usually necessary to regenerate the catalyst. Regeneration is accomplished by burning the coke deposit from the catalyst and then treating with chlorine, HCl-oxygen mixtures or organic chloride-oxygen mixtures to rejuvenate the catalyst and thereby restore its activity and selectivity.

Since the catalyst maintains its catalytic activity over an extended period of time, inlet temperatures do not have to be increased as rapidly, thus reducing the frequency of the need for regeneration. For example, the present catalyst containing separate platinum-rhenium on alumina and iridium on alumina particles has maintained a 100 R+O octane level at an inlet temperature of approximately 510°C (950°F) for about 50 days and can be used with increasing temperature for an extended period before needing regeneration. By comparison, a catalyst containing separate platinum on alumina and iridium on alumina particles at the same condition will require an inlet temperature in excess of 527°C (980°F) at 20 days. The aging rate of the present catalysts as measured by the increase in degrees Celsius of the inlet temperature per day (°C/day) is demonstrated in the Examples.

It is contemplated that the present catalyst described may be employed in any of the conventional types of processing equipment. Thus, the catalyst may be used in the form of discrete particles or the components, in finely divided form, may be admixed and pelleted, cast, molded, extruded or otherwise formed into pieces of desired size and shape, such as rods, spheres, granules, pellets and extrudates, it being essential that each of the pieces is composed of particles of both components. The catalyst may be dispersed as a fixed bed within a reaction zone. The charge stock may be passed through the catalyst bed as a liquid, vapor or mixed phase in either upward or downward flow. The catalyst may also be used in a form suitable for moving beds. In such instance, the charge stock and catalyst are contacted in a reforming zone wherein the charge stock may be passed in concurrent or

countercurrent flow to the catalyst. Alternatively, a suspensoid-type process may be employed in which the catalyst is slurried in the charge stock and the resulting mixture conveyed to the reaction zone. The reforming process is generally carried out in a series of several reactors. Usually, three to five reactors are used. The catalyst may be employed in just one of the reactors, e.g., the first reactor or in several of the reactors or in all of the reactors. After reaction, the product from any of the above processes is separated from the catalyst by known techniques and conducted to distillation columns where the various desired components are obtained by fractionation.

It is possible to isolate the platinum-rhenium-containing portion of the catalyst from the iridium-containing portion since the same are located on separate particles. Thus, should a catalyst become deactivated due to the loss of activity of either the platinum-rhenium-containing portion or the iridium-containing portion of the catalyst, it is only necessary to activate that portion of the catalyst which is adversely affected rather than the whole catalyst. It is thus possible to provide separate and optimum means for ready regeneration of each of the two components. For example, the catalyst, after becoming spent, may be separated into its platinum-rhenium-containing components and iridium-containing components by providing the respective particles with a different physical characteristic which permit their ready separation, such as a different in particle size. The particles of differing size may be separated by flotation, air blowing, sifting or by any of the various other known means for separating physically and/or chemically different materials. The separated platinum-rhenium-containing and iridium-containing particles may then be separately regenerated under conditions best suited for each.

The ability to select the amount of platinum-rhenium-containing component and the amount of iridium-containing component making up the ultimate catalyst mixture has the advantage that the amount of platinum and rhenium, as well as the amount of iridium contained in the catalyst, can be controlled not only by the respective concentrations of the platinum-rhenium and iridium impregnating solutions used but also by the respective amounts of the platinum-rhenium-containing and the iridium-containing components of the catalyst. If the trimetallic catalyst of this invention is used in the form of a mixture of particles, the two components of the mixture will be physically independent. Accordingly, a process using catalysts in this form affords substantial flexibility in catalyst composition within the limits noted hereinabove. Thus, in changing type of charge stocks such as between paraffinic and naphthenic stocks, the catalyst composition can be adjusted with respect to activity and/or selectivity for optimum performance by adding or withdrawing portions of one or the other of the catalyst components.

The separate particles making up the present catalyst afford flexibility in choice of refractory support, such as the type of alumina employed. Thus, in one embodiment it is contemplated that iridium is desirably deposited on the more acidic eta form of alumin with platinum-rhenium being deposited on the gamma form of alumina. Such catalyst would have the advantage of reducing the amount of light hydrocarbons, such as methane and ethane to yield a stream of hydrogen of enhanced purity, suitable for recycle or other use.

The following examples illustrate the catalyst and process of the present invention:

Example 1

A composite of platinum-rhenium on alumina was prepared by presaturating 150 g of humidified 0.158 cm (1/16 in.) gamma alumina beads with gaseous $CO_2$ and then impregnating with 135 ml of an aqueous solution of

$$H_2PtCl_6 \cdot 6H_2O \text{ and } HReO_4$$

containing an equivalent of 0.9 g of metallic platinum and 0.9 of metallic rhenium based on the dry weight of the alumina. The impregnated beads were held under a $CO_2$ atmosphere for one hour, dried and, then calcined at 482°C (900°F) in air to produce beads containing 0.6 weight % platinum and 0.6 weight % rhenium.

A component of iridium on alumina was prepared by presaturating 250 g of humidified 0.158 cm (1/16 in.) gamma alumina beads with gaseous $CO_2$ and then impregnating with 225 ml of an aqueous solution of

$$H_2IrCl_6 \cdot 6H_2O$$

containing an equivalent of 1.5 g of metallic iridium based on the dry weight of the alumina. The impregnated beads were held under a $CO_2$ atmosphere for one hour, dried and then calcined at 371°C (700°F) in nitrogen to produce beads containing 0.6 weight percent iridium.

The platinum-rhenium beads were further treated for 2 hours with a gas containing a mixture of 1.93 volume percent chlorine in nitrogen at a rate of 1.5 weight percent chlorine based on the total catalyst composite weight per hour. Equal amounts of the platinum-rhenum component and the iridium component were then combined to produce a catalyst containing 0.3 weight percent platinum, 0.3 weight percent rhenium, 0.3 weight percent iridium and 1.3 weight percent chlorine which was then treated with hydrogen at a temperature of 454°C (850°F), a hydrogen partial pressure of 101 kPa (1 atm.) for 2 hours before being used in a reforming operation.

Example 2

A composite of platinum-rhenium on

alumina containing 0.3 weight percent platinum, 0.3 weight percent rhenium and 0.69 weight percent chlorine was prepared according to the procedure of Example 1, using 15 g of humidified 0.158 cm (1/16 in.) gamma alumina beads, presaturated with gaseous $CO_2$ and 13.5 ml of aqueous solution of

$$H_2PtCl_6 \cdot 6H_2O \text{ and } HReO_4$$

containing an equivalent of 0.045 g of metallic platinum and 0.045 g of metallic rhenium. The beads were dried and calcined in air as described in Example 1.

Example 3

A composite of iridium on alumina containing 0.375 weight percent iridium and 0.41 weight percent chlorine was prepared according to the procedure of Example 1, using 150 g of humidified 0.158 cm (1/16 in.) gamma alumina beads, presaturated with gaseous $CO_2$ and 135 ml of an aqueous solution of

$$H_2IrCl_6 \cdot 6H_2O$$

containing an equivalent of 0.56 g of metallic iridium. The beads were dried and calcined in nitrogen as described in Example 1.

Example 4

A composite of iridium on alumina containing 1.2 weight percent iridium and 1.31 weight percent chlorine was prepared according to the procedure of Example 1, using 10 g of humidified 0.158 cm (1/16 in.) gamma alumina beads, presaturated with gaseous $CO_2$ and 9 ml of an aqueous solution of

$$H_2IrCl_6 \cdot 6H_2O$$

containing an equivalent of 0.12 g of metallic iridium. The beads were dried and calcined in nitrogen as described in Example 1.

Example 5

Equal weight samples of the composite of platinum-rhenium on alumina of Example 1 and the composite of iridium on alumina of Example 3 were combined and thoroughly mixed together. The final composition of the catalyst was 0.3 wt. % platinum, 0.3 wt. % rhenium, 0.19 weight % iridium and 0.57 weight percent chlorine.

Example 6

Equal weight samples of the composite of platinum-rhenium on alumina of Example 1 and the composite of iridium on alumina of Example 4 were combined and thoroughly mixed together. The final composition of the catalyst was 0.3 wt. % platinum, 0.3 wt. % rhenium, 0.6 wt. % iridium and 1.02 weight percent chlorine.

Example 7

Equal weight samples of the composite of platinum-rhenium on alumina of Example 2 and the composite of iridium on alumina of Example 1 were combined and thoroughly mixed together. The final composition of the catalyst was 0.15 wt. % platinum, 0.15 wt. % rhenium, 0.3 wt. % iridium and 0.51 weight percent chlorine.

Example 8

Equal weight samples of the composite of platinum-rhenium on alumina of Example 2 and the composite of iridium on alumina of Example 3 were combined and thoroughly mixed together. The final composition of the catalyst was 0.15 wt. % platinum, 0.15 wt. % rhenium, 0.19 wt. % iridium and 0.39 weight percent chlorine.

Example 9

The catalyst of Example 1 was tested for reforming utilizing a charge constituting an Arab light naphtha having the following properties:

| | |
|---|---|
| Properties | |
| Gravity, °API (American Petroleum Institute) | 61.5 |
| Specific Gravity | 0.7330 |
| Molecular Weight | 107 |
| Sulfur, ppm | 0.73 |
| Chlorine, ppm | <1 |
| Octane No. RON Clear (Research Octane Number without Lead) | 50.5 |
| ASTM Distillation, | °C (°F) |
| IBP (Initial Boiling Point) | 38(100) |
| 10 % vol | 76(169) |
| 20% vol | 97(206) |
| 30% vol | 108(227) |
| 40% vol | 119(246) |
| 50% vol | 129(264) |
| 60% vol | 138(280) |
| 70% vol | 148(299) |
| 80% vol | 160(320) |
| 90% vol | 173(344) |
| 95% vol | 179(355) |
| FBP (Final Boiling Point) | 197(386) |

| Composition, | Wt. % |
|---|---|
| Paraffins | 69.0 |
| Olefins | 0.6 |
| Naphthenes | 18.3 |
| Aromatics | 11.9 |

Reforming of the above charge was accomplished in an adiabatic three reactor system at an inlet temperature of 504°C (940°F), a pressure of 1480 kPa (200 psig), using a weight hourly space velocity of 2.5, a recycle mole ratio of hydrogen to charge of 5 and a $H_2O/HCl$ ratio of 10 added during the run to halogenate the alumina to a level of approximately 1.0 weight %.

The results obtained are shown in Figure 1 where inlet temperature necessary to obtain a product having an octane number of 100 $C_5^+$ R+O is plotted against time on stream.

Example 10

A comparison was made under reforming conditions of the catalyst of Example 1 and a catalyst made up of equal parts of 0.158 cm (1/16 in.) gamma alumina beads containing 0.6 weight percent platinum and separate 0.158 cm (1/16 in.) gamma alumina beads containing 0.6 weight percent iridium for a total catalyst composition of 0.3 weight percent platinum, 0.3 weight percent iridium and 1.0 weight percent halogen. The charge stock and reforming conditions were same as in Example 9.

The performance of each of these catalysts in a reforming process is demonstrated in Figure 2 wherein the inlet temperature is plotted against days on stream. The aging characteristics can be calculated in terms of the degrees Celsius increase in inlet temperature per day (°C/day).

As can be seen from Figure 2, using the catalyst containing platinum and iridium on separate supports, the inlet temperature increases 22°C (40°F) between the 10th and 25th days or 15°C/day (2.7°F/day). With the catalyst of Example 1, the inlet temperature rises 5.6°C (10°F) between the 15th and 50th day or 0.17°C/day (0.3°F/day). The platinum/iridium catalyst will require regeneration at the end of 25 days whereas the catalyst of Example 1, having only reached an inlet temperature of 513°C (955°F) at the end of 50 days, will not require regeneration for some time.

**Claims**

1. A reforming process comprising contacting a reforming charge stock in a reaction zone under reforming conditions with a catalyst which is a mixture of a first component containing a minor proportion of platinum on a refractory support and a second component containing a minor proportion of iridium on a refractory support, the first component also containing on its support a minor proportion of rhenium, the catalyst containing overall from 0.1 to 5% by weight of platinum from 0.1 to 5% by weight of rhenium, from 0.1 to 5% by weight of iridium and from 0.1 to 5% by weight of halogen, with the relative weight ratio of the particles containing platinum-rhenium and those containing iridium being from 10:1 to 1:10, characterized in that said conditions comprise maintaining the reaction zone free of added sulphur.

2. The process of claim 1 wherein the support is an inorganic oxide.

3. The process of claim 1 wherein the support is alumina.

4. The process of any preceding claim wherein the halogen is chlorine.

5. The process of any preceding claim wherein the weight ratio of particles containing platinum-rhenium and those containing iridium is between 5:1 and 1:5.

6. The process of any preceding claim wherein the size of the particles is between 0.01 and 10,000 micrometers.

7. The process of claim 6 wherein the size of the particles is between 1 and 3000 micrometers.

8. The process of any preceding claim wherein platinum-rhenium is deposited on a support of gamma alumina and iridium is deposited on a separate support of gamma alumina.

9. The process of any of claims 1 to 7 wherein platinum-rhenium is deposited on a support of gamma alumina and iridium is deposited on a support of eta alumina.

10. The process of any one of claims 1 to 8 wherein the catalyst contains 0.3 percent by weight of platinum, 0.3 percent by weight of rhenium, 0.3 percent by weight of iridium and 0.5 to 1.5 percent by weight of chlorine, and wherein the platinum and rhenium are contained on particles of gamma alumina and the iridium is contained on separate particles of gamma alumina, with the relative weight ratio of the particles containing platinum-rhenium and those containing iridium being 1:1.

**Revendications**

1. Un procédé de reformage consistant à mettre en contact une charge de reformage dans une zone de réaction dans des conditions de reformage avec un catalyseur qui est un mélange d'un premier composant contenant une faible proportion de platine sur un support réfractaire et un second composant contenant une faible proportion de platine sur un support réfractaire et un second composant contenant également sur son support une faible proportion de rhénium, la catalyseur comprenant au total de 0,1 à 5% en poids de platine, de 0,1 à 5% en poids de rhénium, de 0,1 à 5% en poids

d'iridium et de 0,1 à 5% en poids d'halogène, le rapport pondéral relatif des particules contenant du platine et du rhénium et de celles contenant de l'iridium étant de 10:1 à 1:10, caractérisé en ce que lesdites conditions consistent à maintenir la zone de réaction exempte de soufre ajouté.

2. Le procédé de la revendication 1, dans lequel le support est un oxyde inorganique.

3. Le procédé de la revendication 1, dans lequel le support est l'alumine.

4. Le procédé de l'une quelconque des revendications précédentes, dans lequel l'halogène est le chlore.

5. Le procédé de l'une quelconque des revendications précédentes, dans lequel le rapport pondéral des particules contenant du platine et du rhénium et de celles contenant de l'iridium est compris entre 5:1 et 1:5.

6. Le procédé de l'une quelconque des revendications précédentes, dans lequel la dimension des particules est comprise entre 0,01 et 10 000 $\mu$m.

7. Le procédé de la revendication 6, dans lequel la dimension des particules est comprise entre 1 et 3 000 $\mu$m.

8. Le procédé de l'une quelconque des revendications précédentes, dans lequel le platine-rhénium est déposé sur un support d'alumine gamme et l'iridium est déposé sur un support séparé d'alumine gamma.

9. Le procédé de l'une quelconque des revendications 1 à 7, dans lequel le platine-rhénium est déposé sur un support d'alumine gamma et l'iridium est déposé sur un support d'alumine êta.

10. Le procédé de l'une quelconque des revendications 1 à 8, dans lequel le catalyseur contient 0,3% en poids de platine, 0,3% en poids de rhénium, 0,3% en poids de pyridium et 0,5% à 1,5% en poids de chlore et dans lequel le platine et le rhénium sont contenus sur des particules d'alumine gamma et l'iridium est contenu sur des particules séparées d'alumine gamme, le rapport pondéral relatif des particules contenant le platine-rhénium et celles contenant l'iridium étant de 1:1.

**Patentansprüche**

1. Reformierverfahren, das das Inkontaktbringen eines Reformier-Einsatzrohstoffs in einer Reaktionszone unter Reformierbedingungen mit einem Katalysator unfaßt, der eine Mischung eines ersten Bestandteils, der einen geringeren Anteil Platin auf einem feuerfesten Träger enthält, und eines zweiten Bestandteils, der einen geringeren Anteil an Iridium auf einem feuerfesten Träger enthält, ist, wobei der erste Bestandteil auf seinem Träger auch noch einen geringeren Anteil Rhenium enthält, wobei der Katalysator insgesamt von 0,1 bis 5 Gew.-% Platin, von 0,1 bis 5 Gew.-% Rhenium, von 0,1 bis 5 Gew.-% Iridium und von 0,1 bis 5 Gew.-% Halogen enthält, wobei das relative Gewichtsverhältnis der Teilchen, die Platin-Rhenium enthalten, zu denen, die Iridium enthalten, von 10:1 bis 1:10 beträgt, dadurch gekennzeichnet, daß die genannten Bedingungen das Freihalten der Reaktionszone von zugesetztem Schwefel umfassen.

2. Verfahren nach Anspruch 1, bei dem der Träger ein anorganisches Oxid ist.

3. Verfahren nach Anspruch 1, bei dem der Träger Aluminiumoxid ist.

4. Verfahren nach einem beliebigen vorausgehenden Anspruch, bei dem das Halogen Chlor ist.

5. Verfahren nach einem beliebigen vorausgehenden Anspruch, bei dem das Gewichts-verhältnis der Teilchen, die Platin-Rhenium enthalten, zu denen, die Iridium enthalten, zwischen 5:1 und 1:5 liegt.

6. Verfahren nach einem beliebigen vorausgehenden Anspruch, bei dem die Größe der Teilchen zwischen 0,01 und 10 000 $\mu$m liegt.

7. Verfahren nach Anspruch 6, bei dem die Größe der Teilchen zwischen 1 und 3000 $\mu$m liegt.

8. Verfahren nach einem beliebigen vorausgehenden Anspruch, bei dem Platin-Rhenium auf einem Träger aus Gamma-Aluminiumoxid abgeschieden ist und das Iridium auf einem getrennten Träger aus Gamma-Aluminiumoxid abgeschieden ist.

9. Verfahren nach einem beliebigen der Ansprüche 1 bis 7, bei dem Platin-Rhenium auf einem Träger aus Gamma-Aluminiumoxid abgeschieden ist und Iridium auf einem Träger aus Eta-Aluminiumoxid abgeschieden ist.

10. Verfahren nach einem beliebigen der Ansprüche 1 bis 8, bei dem der Katalysator 0,3 Gew.-% Platin, 0,3 Gew.-% Rhenium, 0,3 Gew.-% Iridium und 0,5 bis 1,5 Gew.-% Chlor enthält, und bei dem das Platin und das Rhenium auf Teilchen von Gamma-Aluminiumoxid enthalten sind und bei dem das Iridium auf getrennten Teilchen von Gamma-Aluminiumoxid enthalten ist, wobei das relative Gewichtsverhältnis der Teilchen, die Platin-Rhenium enthalten, zu denen, die Iridium enthalten, 1:1 ist.

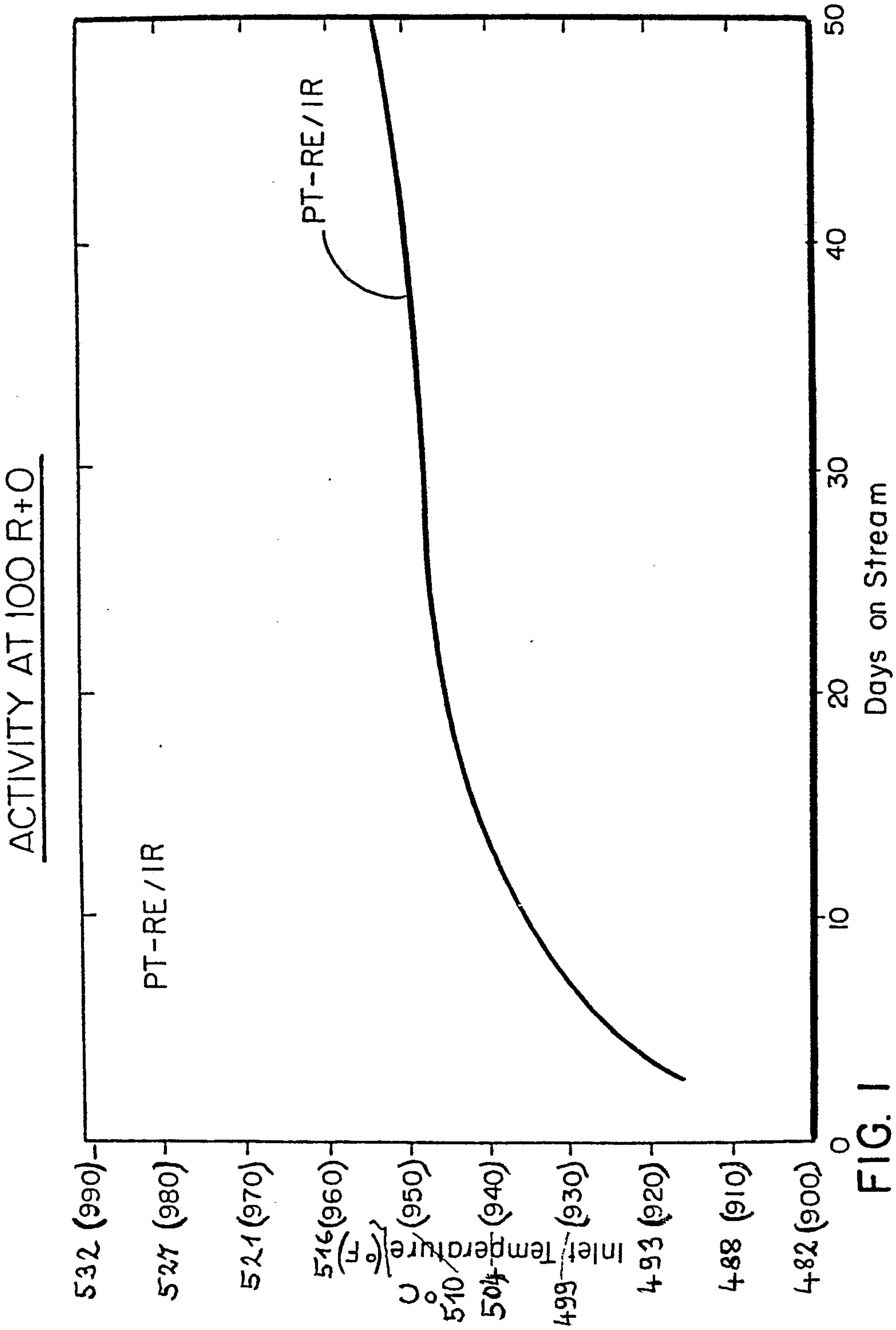
ACTIVITY AT 100 R+O
PT-RE/IR
PT-RE/IR
Inlet Temperature °C (°F)
532 (990)
527 (980)
521 (970)
516 (960)
510 (950)
504 (940)
499 (930)
493 (920)
488 (910)
482 (900)
0
10
20
30
40
50
Days on Stream

FIG. 1

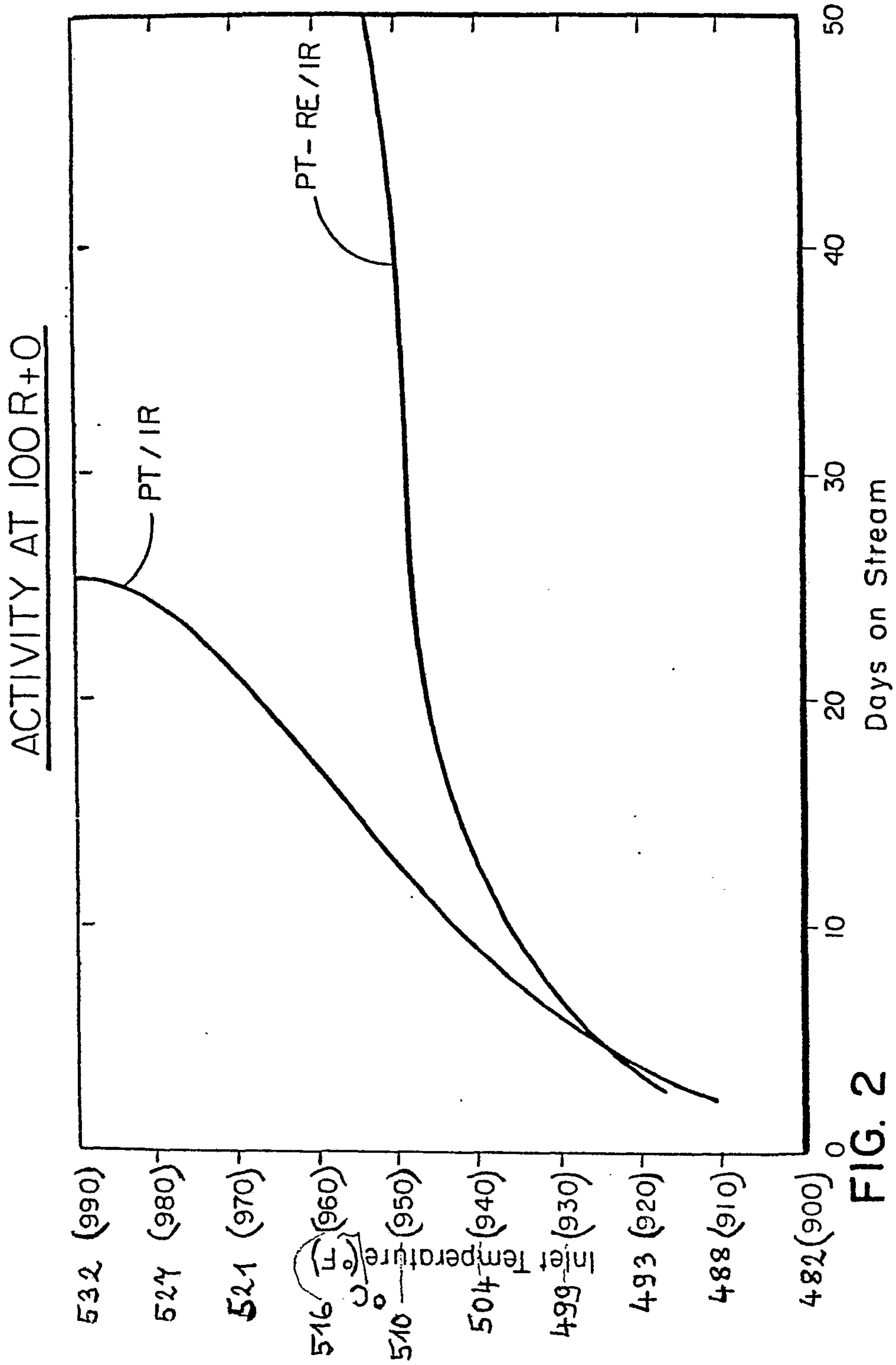
ACTIVITY AT 100 R+O
PT / IR
PT - RE / IR
Inlet Temperature °C (°F)
532 (990)
527 (980)
521 (970)
516 (960)
510 (950)
504 (940)
499 (930)
493 (920)
488 (910)
482 (900)
0
10
20
30
40
50
Days on Stream

FIG. 2